# EUROPEAN PATENT APPLICATION

(11) **EP 3 598 638 A1**
(43) Date of publication of application: **22.01.2020**
(21) Application number: 17890964.4
(22) Date of filing: 03.02.2017
(51) Int. Cl.: H02S 40/10

(54) **SOLAR PANEL CLEANING DEVICE AND SOLAR PANEL CLEANING METHOD**

(30) Priority: 16.01.2017 JP 2017005103
(71) Applicant: Golden Leaf-Works Co., Ltd., Tokyo 135-0064 (JP)
(72) Inventor: MIZOBUCHI Hideaki, Tokyo 135-0064 (JP)
(74) Representative: Mewburn Ellis LLP
(86) International application number: PCT/JP2017/004116
(87) International publication number: WO 2018/131175

(57) **Abstract**

[Problem] To provide a solar panel cleaning device and a solar panel cleaning method capable of effectively cleaning a solar panel with a small amount of cleaning solution. [Solution] The solar panel cleaning device according to the present invention cleans the surface of a solar panel while traveling on the surface of the solar panel and is characterized by being provided with a body portion, a plurality of cleaning portions annexed to the body portion, and a plurality of traveling portions annexed to the body portion, wherein: said cleaning portions each have an injection port, a gas unit, a liquid unit, and a base; said gas unit has one end connected to the injection port and the other end connected to the base and injects a gas into the injection port; said liquid unit has one end connected to the injection port and injects a cleaning solution into the injection port; the gas injected by the gas unit allows the cleaning solution injected by the liquid unit to be injected as water particles toward the surface of the solar panel lying in front in the traveling direction; and the injection angle of the water particles is 15° to 75°, inclusive, with respect to the surface of the solar panel.

## Description

### BACKGROUND OF THE INVENTION

### FIELD OF THE INVENTION

The present invention relates to a solar panel cleaning device and a solar panel cleaning method through the use of the solar panel cleaning device.

### DESCRIPTION OF THE BACKGROUND ART

A solar panel used for solar power generation is generally installed on a rooftop and for this reason, it is likely to be subjected to atmospheric dirt. Many types of technology have been proposed to clean solar panels. In recent years, there has been a sudden increase, in number, of large-scale solar power plants called "mega solar." With such a sudden increase, various sorts of research have been conducted for how to effectively clean a large number of solar panels, and as a result, many types of solar panel cleaning technology have been developed.

As prior art relating to solar panel cleaning, there have been known, e.g., a method for cleaning a panel surface by emitting thereto a jet of cleaning liquid at a high pressure (Patent Document 1); another method for cleaning a panel surface through the use of a rotary brush arranged to a tip of an industrial machine while configured to travel along the panel surface; still another method for manually cleaning a panel surface with a brush; and the like.

### (Prior Art Documents)

### (Patent Documents)

Patent Document 1: Japanese Patent Application Publication No. 2016-107172

### (Problems to be Solved)

Methods of cleaning through the use of high-pressure cleaning devices have the following problems:
[1] The inclined position of panel surfaces has interfered with water (aqueous liquid) being drained from the panel surfaces with ease. For this reason, a large amount of cleaning liquid remains on the panel surface after cleaning. Due to dirt adhering to a wet panel surface caused by the remaining cleaning liquid after cleaning, there has been recontamination by which the solar panel after cleaning is dirtier than that before cleaning. Further, due to the evaporation of the remaining cleaning liquid, there has been a probability of water marks caused by scale deposits left on the panel surface.
[2] A large amount of cleaning liquid has needed to be used, which has resulted in increase of work costs. Further, waste water treatment has been required.
[3] Due to a high pressure at which the cleaning liquid is sprayed, there has been a probability that the panel surface would be damaged.
[4] Due to a large amount of cleaning liquid sprayed at a high pressure, water (aqueous liquid) has been caused to enter a gap between a glass and frame, which has resulted in a failure of the solar panel.

Methods of cleaning through the use of rotary brushes have the following problems:
[1] Some portions of the panel surface have been likely to remain uncleaned due to a short time-period contact between the rotary brush and the panel surface. Dirt having dried on the panel surface, in particular, had difficulty in being effectively removed.
[2] There has been a probability that the panel surface would be damaged due to a direct application of the brush to the panel surface, and due to such damage to the panel surface, the output compensation would be terminated by the panel manufacturer.
[3] The rotary brush has needed to travel in a parallel contact with the panel surface, which has been difficult to operate. For this reason, the surface had some portions uncleaned, or cleaned unevenly. Also, there has been a probability that the solar panel would be damaged due to a direct contact with an industrial machine.
[4] A space has been required to operate an industrial machine, and such a machine could not be operated in a place having narrow spacing between arrays.

Methods of manually cleaning are inefficient in working and are high in work costs, and for this reason, are not applicable to large-scale mega solar plants or the like.

### SUMMARY OF THE INVENTION

In view of the above-described prior-art problems, there is provided the present invention whose objective is to provide a solar panel cleaning device and a solar panel cleaning method for solving such technical problems.

### (Means for Solving Problems)

A solar panel cleaning device, according to the present invention, for solving the above-described problems is the solar panel cleaning device, for cleaning a panel surface of a solar panel while travelling over the panel surface, characterized by comprising: a main body portion; a plurality of cleaning units provided for the main body portion; and a plurality of travelling units provided for the main body portion, wherein each of the plurality of cleaning units includes a base, an injection port, a gas unit having one end thereof connected to the injection port and the other end thereof connected to the base, the gas unit configured to emit a jet of gas into the injection port, and a liquid unit having one end thereof connected to the injection port, the liquid unit configured to emit a jet of cleaning liquid into the injection port, wherein gas emitted in a jet from the gas unit causes cleaning liquid emitted in a jet from the liquid unit to eject, in a form of atomized aqueous liquid as water particles, from the injection port toward the panel surface of the solar panel in a forward travel direction at an ejection angle of the water particles is from 15° to 75° with respect to the panel surface of the solar panel.

In the solar panel cleaning device according to the present invention, the gas unit may further include a gas nozzle for emitting a jet of gas, a gas hose connected to the gas nozzle, and a swing bar having one end thereof pivotally supported by the gas nozzle and the other end thereof pivotally supported by the base, thereby to allow the gas nozzle to swing back and forth in a lateral direction with respect to a travel direction.

In the solar panel cleaning device according to the present invention, the gas nozzle may swing back and forth with the aid of: recoil in reaction to an emitted jet of gas; and restoring force generated in the gas hose in a bent state.

In the solar panel cleaning device according to the present invention, an emitted jet of cleaning liquid may be from 0.1% to 1.0% in amount relative to an emitted jet of gas.

In the solar panel cleaning device according to the present invention, the cleaning liquid may be purified water.

A solar panel cleaning method according to the present invention, through the use of the solar panel cleaning device, characterized by comprising, wherein a first cleaning area, a second cleaning area, a third cleaning area, and a to-be-cleaned area are defined imaginarily on the panel surface of the solar panel, in accordance with respective distances from the solar panel cleaning device in order of the forward travel direction, the steps of: causing atomized aqueous liquid as water particles to eject, by the plurality of cleaning units, so that the water particles are sprayed onto the first cleaning area of the panel surface, thereby to sputter dirt off the first cleaning area; allowing the water particles, reflected from the first cleaning area of the panel surface as a result of being sprayed thereonto, to fall down onto the third cleaning area of the panel surface; further allowing the water particles on the third cleaning area to incorporate thereinto dirt on the third cleaning area, and thereby water droplets contaminated with dirt result in contaminated water droplets; and blowing, by the plurality of cleaning units, gas onto the second surface area of the panel surface, thereby to blow off the contaminated water droplets, wherein the steps are performed in parallel with each other while the solar panel cleaning device travelling over the panel surface of the solar panel.

### (Advantageous Effects of the Invention)

The solar panel cleaning device and the solar panel cleaning method according to the present inventions are configured as described above, thereby capable of achieving the following advantageous effects:
[1] Dirt having a relatively large diameter is blown off by the ejection of water particles, and dirt having a relatively small diameter is dissolved into water droplets and the water droplets dissolved with such dirt are blown off by the ejection of gas. These steps are performed concurrently as well as in parallel with each other while the solar panel cleaning device travels across the panel surface, which is highly effective and efficient.
[2] The gas nozzle is configured to swing back and forth as well as continuously emit a jet of cleaning liquid and gas while travelling over the panel surface. As a result, a large area could be cleaned with a small amount of cleaning liquid and gas.
[3] Cleaning is performed with a small amount of cleaning liquid, and water droplets generated after cleaning are blown off with the aid of gas. As a result, water droplets are less likely to remain on the panel surface, and as a consequence, residual cleaning liquid is less likely to cause recontamination and scale deposits of the panel surface.
[4] Cleaning could be performed with a small amount of cleaning liquid, which results in decrease of work costs and in unnecessity of waste water treatment.
[5] Cleaning could be performed in a non-directly contacting manner with the panel surface, i.e., through the ejection of water particles and gas toward the panel surface. As a result, the panel surface is less likely to be damaged.
[6] Cleaning could be performed while the solar panel cleaning device travels over the panel surface. As a result, the solar panel cleaning device is easy to operate, and is less likely to have any portions uncleaned, or cleaned unevenly.
[7] The entire panel surface could be cleaned in one-time travelling of work, which is highly efficient in working and is reduced in work costs.

### BRIEF DESCRIPTIONS OF THE DRAWINGS

FIG. 1 depicts an explanatorily exemplified perspective view of a solar panel cleaning device according to the present invention.
FIG. 2 depicts an explanatory view (A) of a cleaning unit and another explanatory view (B) of a cleaning unit.
FIG. 3 depicts an explanatory view (A) of a cleaning unit and another explanatory view (B) of a cleaning unit.
FIG. 4 depicts an explanatory diagram of a solar panel cleaning method according to the present invention.

### DESCRIPTIONS OF EMBODIMENTS OF THE INVENTION

A solar panel cleaning device and a solar panel cleaning method according to the present inventions are described in detail with reference to the drawings.

Hereinafter, an "inclination direction" refers to a direction on a panel surface from the top toward the bottom of an inclined solar panel, and a "horizontal direction" refers to a direction orthogonal to the inclination direction, i.e., a continuous direction of the solar panel.

The term "dirt" refers to material such as dust, sand, soil, pollen, or ash having a particle size approximately from a few µm to a few mm, and includes any substance settling on the surface of a solar panel.

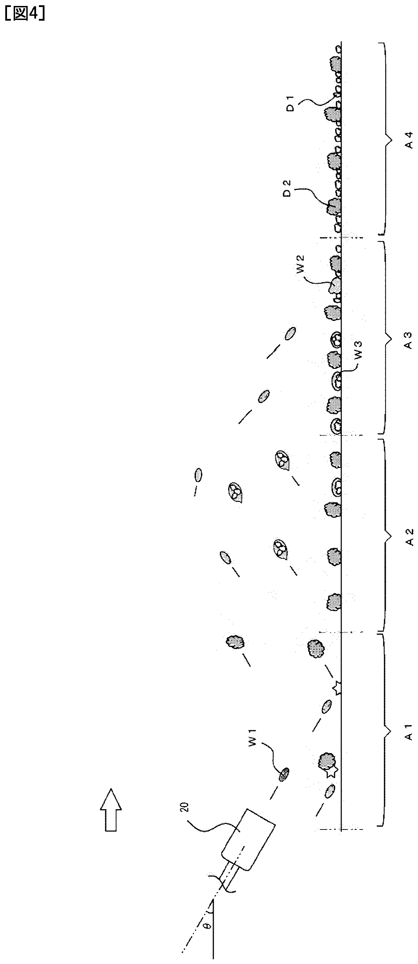

An "ejection angle θ" refers to an angle formed between an ejection direction of cleaning liquid and the panel surface when the ejection direction is directed forward along a travel direction (FIG. 4).

### (FIRST EXAMPLE)

### [Solar Panel Cleaning Device]

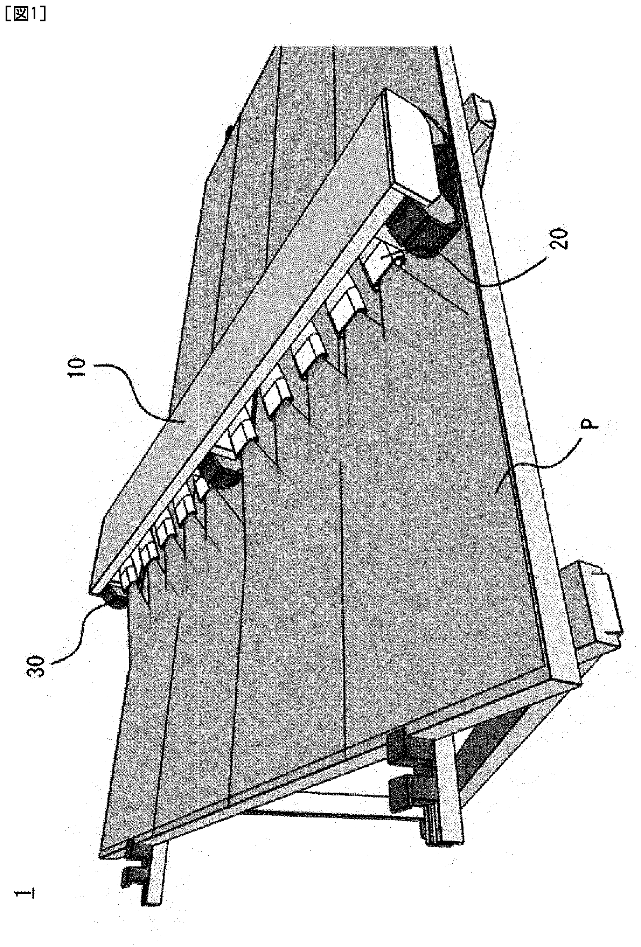

### [1] Overall Structure (FIG. 1)

A solar panel cleaning device 1 according to an embodiment of the present invention is a device for cleaning a panel surface of a solar panel (P) in a non-directly contacting manner with the panel surface, i.e., through the spraying of cleaning liquid (W) onto the panel surface while travelling over the panel surface in a horizontal direction.

The solar panel cleaning device 1 includes at least a main body portion 10, a plurality of cleaning units 20 arranged on the main body portion 10 and a plurality of travelling units 30 arranged on the main body portion 10.

In the cleaning operation, the solar panel cleaning device 1 is connected, through e.g. hoses (not shown in FIG. 1), to gas-supply means 2 (not shown in FIG. 1) for supplying high-pressure gas (G) and liquid-supply means 3 (not shown in FIG. 1) for supplying cleaning liquid (W) to the cleaning units 20, respectively.

### [2] Main Body Portion

The main body portion 10 is a main structural component of the solar panel cleaning device 1.

In this embodiment, the main body portion 10 includes an aluminum frame and a synthetic resin cover covering the frame.

The main body portion 10 houses various sorts of hoses for the cleaning units 20, motors and batteries for the travelling units 30, and the like.

When a lengthwise length of the main body portion 10 is so adjusted as to correspond to an inclination-direction width of the solar panel (P), the entire panel surface of the solar panel (P) could be cleaned in one-time travelling of work.

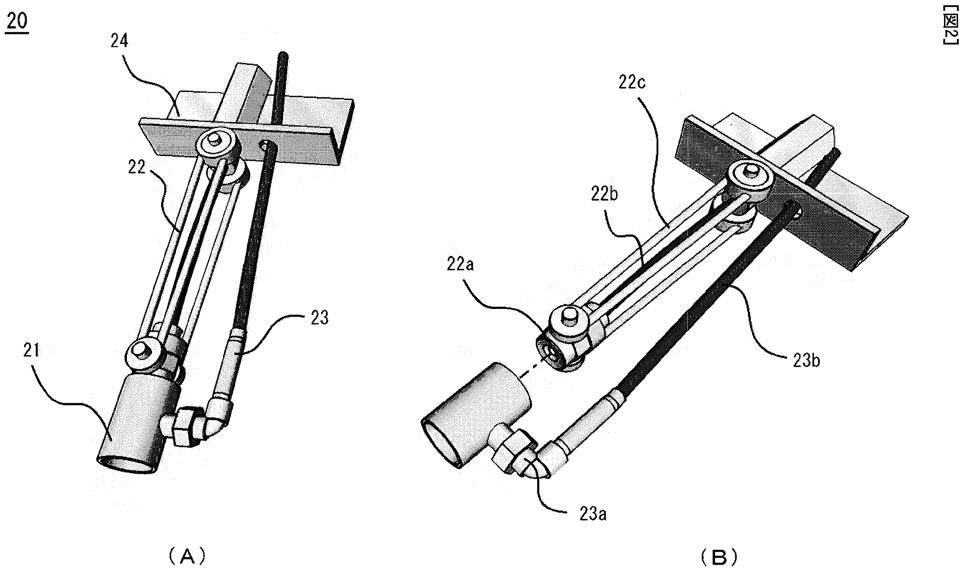

### [3] Cleaning Unit (FIG. 2)

The cleaning unit 20 is a component configured to emit a jet of cleaning liquid (W) and gas (G), thereby to allow the cleaning liquid (W) and the gas (G) to eject onto the panel surface of the solar panel (P).

In this embodiment, the plurality of cleaning units 20 are arranged on the main body portion 10 such that each cleaning unit 20 is directed from a lower side (as seen along a direction normal to the panel surface) of the main body portion 10 toward the panel surface as well as the cleaning units 20 are arranged in parallel with each other along the inclination direction of the solar panel (P). The interval between the cleaning units 20 arranged to be adjacent to each other in the inclination direction is set such that cleaning regions of the respective cleaning units 20 overlap in part.

In this embodiment, each cleaning unit 20 is oriented such that the ejection angle (θ) of cleaning liquid (W) with respect to the panel surface is 30°. The ejection angle (θ) will be further described later.

Each cleaning unit 20 includes an injection port 21, a gas unit 22, a liquid unit 23, and a base 24.

The injection port 21 is a component configured such that cleaning liquid (W) and gas (G) are converged together therein. In this embodiment, the injection port 21 having a tubular shape with both ends in communication with each other is adopted.

The gas unit 22 has a front end connected to the injection port 21 and a rear end pivotally supported by the base 24.

The liquid unit 23 has a front end connected to the injection port 21.

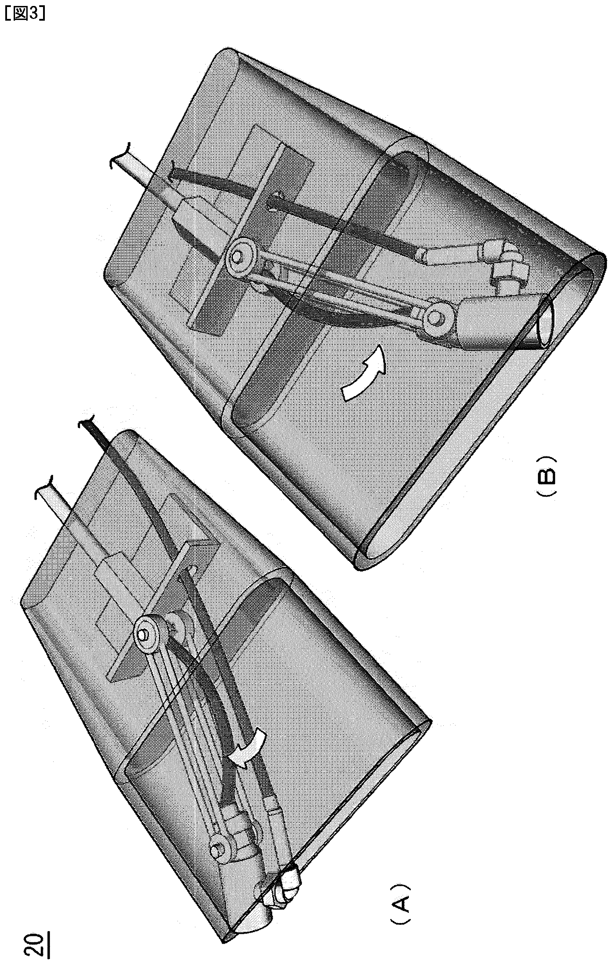

The base 24 is a base portion connected to the main body portion 10, and includes the injection port 21, the gas unit 22, and the liquid unit 23. The base 24 may include a casing with which these components are enclosed (FIG. 3).

The cleaning units 20 each is not necessarily arranged only on one side, which is closer to the panel surface (i.e. a lower side as seen along a direction normal to the panel surface), of the main body portion 10, but may be so arranged on the other side, which is opposite to said one side (i.e. an upper side as seen along a direction normal to the panel surface), of the main body portion 10 as to be directed toward the panel surface.

### Gas unit

The gas unit 22 is a component configured to cause gas (G) to eject outside the injection port 21 through the emission of a jet of gas (G) into the injection port 21.

In this embodiment, the gas unit 22 includes a gas nozzle 22a, a gas hose 22b connected to the gas nozzle 22a for pneumatically feeding the gas (G) therethrough, and a swing bar 22c.

The gas nozzle 22a is so connected to one opening end of the injection port 21 as to cause the gas (G) to eject from the other opening end of the injection port 21 to outside.

The gas hose 22b extends through the main body portion 10 to outside and is connected to the gas-supply means 2, which will be described later. For the gas hose 22b, a flexible hose made of synthetic resin or the like is adopted.

The swing bar 22c has one end pivotally supported by the gas nozzle 22a and the other end pivotally supported by the base 24 through their respective spindles aligned along a direction (i.e. lower-and-upper direction) normal to the panel surface as well as orthogonal to a lengthwise direction of the swing bar 22c.

As a result of such a structure, the gas nozzle 22a is allowed to swing back and forth in a lateral direction (i.e. left-to-right direction) with respect to a travel direction (FIG. 3).

### Liquid unit

The liquid unit 23 is a component configured to supply cleaning liquid (W) into the injection port 21.

In this example, the liquid unit 23 includes a liquid nozzle 23a and a liquid hose connected to the liquid nozzle 23a.

The liquid nozzle 23a is so connected to a side wall of the injection port 21 as to emit a jet of cleaning liquid (W) toward inside of the injection port 21.

The liquid hose 23b extends through the main body portion 10 to outside and is connected to the liquid-supply means 3, which will be described later. For the liquid hose 23b, a flexible hose made of synthetic resin or the like is used as the liquid hose 23b.

### Ejection function of cleaning unit

The ejection function of each cleaning unit 20 is described below.

The solar panel cleaning device 1 according to an embodiment of the present invention is characterized in that each of the plurality of cleaning units 20 causes the ejection of gas (G), concurrently with, the ejection of cleaning liquid (W) in the form of atomized aqueous liquid, as water particles (W1), through the interaction with the gas (G).

In the cleaning operation, the liquid unit 23 emits a jet of cleaning liquid (W), via the liquid nozzle 23a, from a side wall to inside of the injection port 21. Concurrently, the gas unit 22 emits a jet of gas (G) from the gas nozzle 22a in the open direction of the injection port 21.

As a result of the interactive emission of a jet of gas (G), cleaning liquid (W) in the injection port 21 could be dispersed into fine water particles (W1), and such fine water particles (W1) could eject outside the injection port 21 while being accelerated.

Concurrently, the gas (G) could also eject outside the injection port 21.

### Swing function of cleaning unit (FIG. 3)

The swing function of each cleaning unit 20 is described below.

The solar panel cleaning device 1 according to an embodiment of the present invention is characterized in that each of the plurality of cleaning units 20 cleans while the gas nozzle 22a swings back and forth in a lateral direction (i.e. left-to-right direction) with respect to a travel direction.

In this embodiment, the gas nozzle 22a is configured to continuously swing back and forth with the aid of recoil in reaction to an emitted jet of gas (G), and restoring force generated in the gas hose 22b in a bent state.

More specifically, the operation, from a state where both the gas nozzle 22a and the swing bar 22c are arranged in a forward travel direction, is described below.
[1] When the gas nozzle 22a emits a jet of gas (G), recoil in reaction to the emission causes the gas nozzle 22a to swing to the right side in a casing, as seen in FIG. 3, around the spindle supporting the swing bar 22c with respect to the base 24. As a result, the gas hose 22b bends in a swinging direction of the gas nozzle 22a (toward the right side as seen in FIG. 3).
[2] As a result of the above bending of the gas hose 22b, the gas nozzle 22a connected to the front end of the gas hose 22b rotates clockwise at a certain angle around the spindle supporting the swing bar 22c ((A) of FIG. 3).
[3] In response to the above rotation of the gas nozzle 22a, an ejection direction of gas (G) rotates clockwise at a certain angle, as seen in (A) of FIG. 3, around the spindle for the gas nozzle 22a.
[4] Due to recoil in reaction to the emission of gas (G) from the gas nozzle 22a and elastic force biased by the bent gas hose 22b to return to a straight shape, the gas nozzle 22a provided at a tip of the swing bar 22c is caused to turn back toward the center of the casing between the left and right sides as seen in FIG. 3.
[5] Due to the restoring force for the swing bar 22c to turn back toward the center of the casing, the gas nozzle 22a is caused to swing toward the right side after overshooting the center of the casing ((B) of FIG. 3).
[6] The above states 1 to 5 are continuously repeated in an alternate manner between the left and right sides as seen in FIG. 3.

It is to be noted that means for causing the cleaning unit 20 to swing back and forth is not limited only to the above structures, but may be other structures in which a drive force of the travelling unit 30 is, e.g., mechanically transmitted to the cleaning unit 20 for the swinging.

### [4] Travelling Unit

The travelling units 30 each is a component configured to cause the solar panel cleaning device 1 to travel.

In this embodiment, three electric rubber crawlers are adopted for the travelling units 30. The electric rubber crawlers are attached on a side of the main body portion 10 closer to the panel surface (i.e. a lower side as seen along a direction normal to the panel surface) at both ends and the center along a lengthwise direction thereof, respectively.

The rubber crawlers travel stably and are unlikely to damage the panel surface of the solar panel (P) when traveling. The present invention is not limited only to such a structure, but rubber tires may be adopted for the travelling units 30.

The operational power of the electric rubber crawlers is supplied externally via an electric cable. Alternatively, the main body portion 10 may be provided with a battery for power source.

### [5] Gas-supply Means

The gas-supply means 2 is a device configured to supply gas (G) to the cleaning units 20 of the solar panel cleaning device 1. The gas-supply means 2 is connected to the gas hoses 22b of the cleaning units 20.

In this embodiment, a combination of: a compressor configured to compress air and supply the air as high-pressure gas; and a regulator for regulating air pressure is adopted for the gas-supply means 2.

### [6] Liquid-supply Means

The liquid-supply means 3 is a device configured to supply cleaning liquid (W) to the cleaning units 20 of the solar panel cleaning device 1. The liquid-supply means 3 is connected to the liquid hoses 23b of the cleaning units 20.

In this example, a combination of: a liquid storage tank; and a compressor configured to pressurize the cleaning liquid (W) in the liquid storage tank is adopted for the liquid-supply means 3.

### [7] Cleaning Liquid

In this example, water is used as the cleaning liquid (W). However, the cleaning liquid (W) is not limited only to water, but cleaning liquid containing detergent may be used. An embodiment in which purified water is used as the cleaning liquid (W) will be described later.

### Solar Panel Cleaning Method

### [1] Overall Structure (FIG. 4)

Subsequently, a cleaning method through the use of the solar panel cleaning device 1 according to an embodiment of the present invention is described.

The solar panel cleaning method according to an embodiment of the present invention is a cleaning method by which water particles (W1) and gas (G) are caused to eject onto a panel surface of a solar panel (P) while the solar panel cleaning device 1 horizontally travels across the panel surface.

FIG. 4 depicts an explanatory diagram showing the cleaning method for the solar panel (P) according to an embodiment of the present invention. In the descriptions, the panel surface of the solar panel (P) is imaginarily divided into a first cleaning area (A1), a second cleaning area (A2), a third cleaning area (A3), and a to-be-cleaned area (A4) from the front to the rear of the panel surface in accordance with their respective distances from the solar panel cleaning device 1.

For the sake of convenience, the to-be-cleaned area (A4), the third cleaning area (A3), the second cleaning area (A2), and the first cleaning area (A1) will be described in the stated order.

### To-be-cleaned area

Dirt (D) has accumulated on the panel surface in the to-be-cleaned area (A4).

In the following descriptions, the dirt (D) is classified into small dirt (D1) with a relatively small particle size such as air pollution and yellow dust, and large dirt (D2) with a relatively large particle size such as sand and pollen.

These classifications are provided merely for convenience. In actuality, dirt (D) with various sorts of diameter mixed together is cleaned as small dirt (D1) and large dirt (D2) depending on diameter, weight, and shape.

### Third cleaning area

In the third cleaning area (A3) on the panel surface, water particles (W1) so reflected off as to fly off the panel surface in the first cleaning area (A1), which will be described later, drip down onto the panel surface in the third cleaning area (A3) to become water droplets (W2).

Due to a falling-down force of the water droplets (W2) and the inclination of the solar panel (P), the water droplets (W2) roll across the panel surface while incorporating thereinto small dirt (D1) in the vicinity thereof so as to become contaminated water droplets (W3).

The water droplets (W2) could continue to incorporate thereinto the small dirt (D1) even if such small dirt (D1) has dried and adhered to the panel surface. As a result, small dirt (D1) could be removed from the panel surface and incorporated into the water droplets (W2).

### Second cleaning area

In the second cleaning area (A2) on the panel surface, the ejection pressure of gas (G) increases and the contaminated water droplets (W3) containing the small dirt (D1) are blown off the panel surface.

### First cleaning area

In the first cleaning area (A1) on the solar panel, the water particles (W1) caused to eject from the cleaning units 20 collide with large dirt (D2) remaining on the panel surface and blow such large dirt (D2) off the panel surface.

Both the water particles (W1) having blown away the large dirt (D2) and the water particles (W1) not having reached the large dirt (D2) are reflected off the panel surface and drip down onto the third cleaning area (A3) so as to become the water droplets (W2) (to be continued to [1.2] described above)

With the above-described operations, all dirt (D) on the solar panel (P) could be removed.

It is to be noted that all the cleaning liquid (W) on the panel surface is blown away by the gas (G) and therefore, no cleaning liquid (W) remains on the panel surface after cleaning.

### [2] Characteristics of Cleaning Method According to Present Invention

By applying the solar panel cleaning method according to an embodiment of the present invention, the dirt (D2) with a large diameter could be blown off the panel surface by the ejection of the water particles (W1), and the dirt (D1) with a small diameter could be incorporated into the water droplets (W2) so as to be blown off the panel surface by the ejection of the gas (G).

By performing the steps concurrently in parallel with each other while performing the travel of the solar panel cleaning device 1, an excellent cleaning effect could be achieved with a small amount of the cleaning liquid (W).

### [3] Ejection Angle (FIG. 4)

The solar panel cleaning method according to an embodiment of the present invention is a technology by which the dirt (D) on the panel surface of the solar panel (P) is blown off by the cleaning liquid (W) in the form of the water particles (W1).

If the ejection angle (θ) is too large, the water particles (W1) forcefully collide with the panel surface and are dispersed. For this reason, the dirt (D) could not be blown very far. Further, the water particles (W1) could not be reflected off the panel surface or drip down onto a separate panel surface.

If the ejection angle (θ) is too small, the cleaning liquid (W) is dispersed in an area too wide and the cleaning power is reduced.

For this reason, it is necessary to appropriately set the ejection angle (θ) for the cleaning liquid (W) with respect to the panel surface.

In view of the above, the ejection angle (θ) is preferably set between 15° and 75°. In this embodiment, the ejection angle (θ) is set to 50°.

### [4] Ratio of Emission Amounts between Cleaning Liquid and Gas

The solar panel cleaning method according to an embodiment of the present invention is a technology by which a small amount of the cleaning liquid (W) is caused to eject with the aid of the gas (G) to effectively clean the solar panel (P).

If the amount of ejecting cleaning liquid (W) is too high in comparison to the amount of ejecting gas (G), the panel becomes soaked in the cleaning liquid (W) and the cleaning liquid (W) remains on the panel surface, after cleaning, to cause recontamination and scale formation.

If the amount of ejecting cleaning liquid (W) is too low, the amount of ejecting water particles (W1) decreases and for this reason, not all the dirt (D) on the panel surface could be blown off.

For this reason, it is necessary to appropriately set the ratio of the amount between ejecting gas (G) supplied by the gas unit 22 and the amount of ejecting cleaning liquid (W) supplied by the liquid unit 23 (i.e. W/G).

In view of the above, the amount of ejecting cleaning liquid (W) is preferably set from approximately 0.1 to 1.0% of the amount of ejecting cleaning gas (G). When the ratio is within such a range, the panel surface could be effectively cleaned and excess cleaning liquid (W) is unlikely to remain on the panel surface.

In this example, the cleaning liquid (W) is supplied at 0.3 L/min and the gas (G) is supplied at 200 L/min at a pressure of 0.5 MPa (W/G = 0.15%).

### (SECOND EXAMPLE)

Another embodiment in which purified water is used as the cleaning liquid is described below.

Purified water is highly pure water not or hardly containing impurities such as organic compounds, inorganic compounds, and bacteria.

For example, purified water may be produced through the use of a water purifier based upon ion exchange, electro-deionization ("EDI"), reverse osmosis, or another suitable method. This purified water may be supplied from the liquid-supply means 3 to the liquid unit 23 and be used as the cleaning liquid (W).

Purified water does not contain any impurities and is therefore very effective at dissolving substances. Therefore, the dirt (D) could be actively dissolved and absorbed instead of being simply washed away.

Purified water also acts as an insulator. Therefore, static electricity is more likely to be generated and that static electricity could draw in surrounding dirt (D) to capture the dirt (D) in the purified water. As a result, purified water has much greater cleaning power than ordinary tap water.

Further, purified water does not leave any residue even after the purified water evaporates. Therefore, scale is unlikely to be formed on the panel surface of the solar panel (P) after cleaning.

With the above-described structure, the solar panel (P) could be cleaned more effectively.

### (Reference Numerals)

- 1: Solar panel cleaning device
- 10: Main body portion
- 20: Cleaning unit
- 21: Injection port
- 22: Gas unit
- 22a: Gas nozzle
- 22b: Gas hose
- 22c: Swing bar
- 23: Liquid unit
- 23a: Liquid nozzle
- 23b: Liquid hose
- 24: Base
- 30: Travelling unit
- 2: Gas-supply means
- 3: Liquid-supply means
- P: Solar panel
- A1: First cleaning area
- A2: Second cleaning area
- A3: Third cleaning area
- A4: To-be-cleaned area
- D: Dirt
- D1: Small dirt
- D2: Large dirt
- W: Cleaning liquid
- W1: Water particles
- W2: Water droplets
- W3: Contaminated water droplets
- G: Gas
- Θ: Ejection angle

## Claims

1. A solar panel cleaning device for cleaning a panel surface of a solar panel while travelling over the panel surface, the solar panel cleaning device comprising:
a main body portion;
a plurality of cleaning units provided for the main body portion; and
a plurality of travelling units provided for the main body portion, wherein
each of the plurality of cleaning units includes
a base,
an injection port,
a gas unit having one end thereof connected to the injection port and the other end thereof connected to the base, the gas unit configured to emit a jet of gas into the injection port, and
a liquid unit having one end thereof connected to the injection port, the liquid unit configured to emit a jet of cleaning liquid into the injection port, wherein
gas emitted in a jet from the gas unit causes cleaning liquid emitted in a jet from the liquid unit to eject, in a form of atomized aqueous liquid as water particles, from the injection port toward the panel surface of the solar panel in a forward travel direction at an ejection angle of the water particles is from 15° to 75° with respect to the panel surface of the solar panel.

2. The solar panel cleaning device according to claim 1, wherein
the gas unit further includes
a gas nozzle for emitting a jet of gas,
a gas hose connected to the gas nozzle, and
a swing bar having one end thereof pivotally supported by the gas nozzle and the other end thereof pivotally supported by the base, thereby to allow the gas nozzle to swing back and forth in a lateral direction with respect to a travel direction.

3. The solar panel cleaning device according to claim 2, wherein the gas nozzle swings back and forth with the aid of: recoil in reaction to an emitted jet of gas; and restoring force generated in the gas hose in a bent state.

4. The solar panel cleaning device according to claim 1, wherein an emitted jet of cleaning liquid is from 0.1% to 1.0% in amount relative to an emitted jet of gas.

5. The solar panel cleaning device according to claim 1, wherein the cleaning liquid is purified water.

6. A solar panel cleaning method through the use of the solar panel cleaning device according to any one of claims 1 to 5, the method comprising,
wherein a first cleaning area, a second cleaning area, a third cleaning area, and a to-be-cleaned area are defined imaginarily on the panel surface of the solar panel, in accordance with respective distances from the solar panel cleaning device in order of the forward travel direction,
the steps of:
causing atomized aqueous liquid as water particles to eject, by the plurality of cleaning units, so that the water particles are sprayed onto the first cleaning area of the panel surface, thereby to sputter dirt off the first cleaning area;
allowing the water particles, reflected from the first cleaning area of the panel surface as a result of being sprayed thereonto, to fall down onto the third cleaning area of the panel surface;
further allowing the water particles on the third cleaning area to incorporate thereinto dirt on the third cleaning area, and thereby water droplets contaminated with dirt result in contaminated water droplets; and
blowing, by the plurality of cleaning units, gas onto the second surface area of the panel surface, thereby to blow off the contaminated water droplets,
wherein the steps are performed in parallel with each other while the solar panel cleaning device travelling over the panel surface of the solar panel.
